Europäisches Patentamt

European Patent Office

Office européen des brevets

(19)

(11) Veröffentlichungsnummer : **0 065 108**
B2

(12) **NEUE EUROPÄISCHE PATENTSCHRIFT**

(45) Veröffentlichungstag der neuen Patentschrift :
23.11.89

(21) Anmeldenummer : 82103212.5

(22) Anmeldetag : 16.04.82

(51) Int. Cl.⁴ : **A 01 G   9/02**

(54) Dünnwandiges Pflanzgefäss.

(30) Priorität : 19.05.81 DE 3119778

(43) Veröffentlichungstag der Anmeldung :
24.11.82 Patentblatt 82/47

(45) Bekanntmachung des Hinweises auf die Patenterteilung : 27.12.85 Patentblatt 85/52

(45) Bekanntmachung des Hinweises auf die Entscheidung
über den Einspruch : 23.11.89 Patentblatt 89/47

(84) Benannte Vertragsstaaten :
AT CH DE FR GB IT LI NL

(56) Entgegenhaltungen :
DE--A-- 1 479 330
DE--B-- 2 118 841
DE--U-- 1 897 195
DE--U-- 1 995 263
DE--U-- 8 010 117
US--A-- 2 988 258
US--A-- 3 190 530
Neizert: "Pressluft-Formung von thermoplastischen
Kunststoff-Folien", Speyer/Rhein 1961
Neizert: "Vakuum-Formung von thermoplastischen
Kunststoff-Folien", Speyer/Rhein 1962

(73) Patentinhaber : BELLAPLAST GmbH
Karl-Bosch-Strasse 10
D-6200 Wiesbaden 1 (DE)

(72) Erfinder : Berlit, Horst
Mainzer Weg 12
D-6501 Klein-Winternheim (DE)

(74) Vertreter : Seids, Heinrich, Dipl.-Phys.
Dr. Fuchs, Dr. Luderschmidt, Dipl.-Phys. Seids, Dr.
Mehler Patentanwälte Abraham-Lincoln-Strasse 7
Postfach 46 60
D-6200 Wiesbaden (DE)

EP 0 065 108 B2

Jouve, 18, rue St-Denis, 75001 Paris, France

## Beschreibung

Die Erfindung bezieht sich auf dünnwandige Pflanzgefäße aus thermoplastischem Kunststoff, bei dem in Art eines Pflanzentopfes der Gefäßboden, die Umfangswand und der die Umfangswand abschließende Öffnungsrand einstückig durch Tiefziehen aus Polyolefin, beispielsweise Polypropylen geformt sind und sich die Umfangswand vom Boden zum Öffnungsrand hin erweitert.

Bei den bekannten Pflanzgefäßen dieser Art, insbesondere auch bei solchen aus DE-U-8 010 117 bekannten, aus thermoplastischem Kunststoff tiefgezogenen Pflanzgefäßen dieser Art ist die gesamte Gefäßwandung stabil und tragfähig ausgebildet. Dies hat zur Folge, daß solche Pflanzgefäße durch den für die stabile Ausbildung der Gefäßwandung erforderlichen Materialaufwand relativ teuer und schwer sind. Dieser Material- und Kostenaufwand lohnt sich deshalb in der Praxis im allgemeinen nur für solche Pflanzgefäße, in denen Pflanzen während ihrer gesamten oder den wesentlichen Teil ihrer Lebensdauer eingepflanzt bleiben sollen.

Aus der US-A-2 988 258 sind Trinkbecher aus thermoplastischem Kunststoff bekannt, die, wenn sie mit Flüssigkeit, nämlich Getränk, gefüllt sind, im Mittelteil seiner Umfangswand von Hand festgehalten werden können. Die Umfangswand eines solchen Bechers ist nicht flexibel, da es sonst absolut unmöglich wäre, einen solchen mit Getränk gefüllten Becher im Mittelteil seiner Umfangswand von Hand festzuhalten.

Vielmehr sind Becher der in US-A-2 988 258 beschriebenen Art aus solchem thermoplastischem Kunststoff hergestellt, der auch bei Wandstärken zwischen 175 und 300 μm ausreichende Steifigkeit der Behälterwand gewährleistet, daß die Umfangswand von Hand umgriffen werden kann, ohne sie beutelartig oder sackartig zusammenzudrücken.

Der in US-A-3 045 887 beschriebene Trinkbecher besteht aus starrem Polystyrol mit einer Wandstärke zwischen 200 μm und 300 μm. Bei dieser Wandstärke hat starres Polystyrol noch soviel Eigensteifigkeit, daß der Becher einen stabilen elastischen Körper darstellt, der keine flexiblen Wandteile aufweist.

Bei der US-A-3 190 530 und der NL-A-301 001 handelt es sich ebenfalls um stabile Becher aus thermoplastischem Kunststoff, bei denen der Öffnungsrand stabil ausgebildet ist und die Wandung eine Stärke von 50 μm bis 850 μm aufweist.

Aus « Vakuum-Formung von thermoplastischen Kunststoff-Folien » von Willi A. Neizert, Rudolf Zeichner Verlag GmbH, Speyer/Rhein, 1967, S. 46 und 47 sind tiefgezogene Becher bekannt, die im Bodenbereich etwa 10 μm aufweisen. Von derartigen Bechern wird in dieser Druckschrift wegen der durch Negativ-Formung ohne mechanische Vorstreckung erzielten ungünstigen Wanddickenverteilung abgeraten.

Für Pflanzen-Anzuchtgefäße oder solche Pflanzgefäße, die nur dazu dienen sollen, den Erdballen während einer Übergangszeit oder des Transportes zusammenzuhalten, hat man deshalb nach weniger kostenaufwendigen Lösungen gesucht. Das in der Praxis bekannte Einschlagen des Erdballens von Pflanzen in Jutegewebe hat sich als nachteilig erwiesen, weil es die wirksame Bewässerung des Erdballens und die Ausbildung des Wurzelstocks im Erdballen erschwert.

Es ist auch in der Praxis bekanntgeworden, Pflanzbeutel zu benutzen, um den Erdballen von Pflanzen aufzunehmen. Diese Pflanzbeutel sind zwar in ihrer Herstellung kostengünstig. Ihre Benutzung, d. h. das Einführen des Erdballens und das Einpflanzen, verursachen aber Schwierigkeiten und erfordern entweder zusätzliches Personal oder eine spezielle maschinelle Ausrüstung bei den Gärtnereibetrieben bzw. Baumschulbetrieben.

Aufgabe der Erfindung ist es daher, ein dünnwandiges Pflanzgefäß zu schaffen, das sich durch den bekannten Pflanzbeuteln vergleichbare geringe Herstellungskosten auszeichnet und dabei ebenso gute Handhabungsmöglichkeiten und ebenso gute Wachstumsbedingungen für die Pflanzen bietet, wie die bekannten stabilen Pflanztöpfe.

Diese Aufgabe wird erfindungsgemäß dadurch gelöst, daß ausgehend von dem eingangs angeführten dünnwandigen Pflanzgefäß der Öffnungsrand als tragendes und versteifendes Element aus dem Polyolefin stabil ausgebildet ist und die Umfangswand und der Boden als einstückig daran angeschlossener, beutelartiger Gefäßteil dünnfolienartig auf eine Wanddicke zwischen 10 μm und 25 μm aus dem Polyolefin tiefgezogen ausgeführt sind.

Durch die einstückige Verbindung eines stabilen versteifenden Öffnungsrandes mit einem dünnfolienartig tiefgezogenen, beutelartigen Gefäßteil, der die Umfangswand und den Boden bildet, ist eine kostengünstige Herstellung möglich. Mit seinem versteifenden stabilen Öffnungsrand läßt sich das erfindungsgemäße Pflanzgefäß in herkömmlichen Topfmaschinen zum Einbringen des Erdballens bzw. der Pflanze mit Wurzel und Erdballen benutzen, so daß Gärtnereibetriebe und Baumschulenbetriebe keine zusätzlichen maschinellen Investitionen benötigen Dies gilt auch für solche Fälle, in denen zunächst das Pflanzgefäß mit Erde gefüllt und anschließend bepflanzt wird, weil nach dem Einfüllen der Erde in den herkömmlichen Einrichtungen das Pflanzgefäß durch die Erdfüllung so versteift wird, daß auch ein Einpflanzen in den herkömmlichen Bepflanzungsmaschinen oder ein herkömmliches Bepflanzen von Hand (Gärtnergriff) ohne weiteres möglich wird.

Durch die dünnwandige Ausbildung der Gefäßwandung ist das Entfernen des erfindungsgemäßen Pflanzgefäßes von einem Wurzel- und Erdballen durch einfaches Aufschneiden der Gefäßwandung in Einmalgebrauch wesentlich erleichtert. In vorteilhafter Weiterbildung und Ergänzung der Erfindung können die Umfangswand und der Boden des Pflanzgefäßes durch eingeformte Profilelemente für Aufstellen und Nesten der leeren Pflanzgefäße soeben ausreichend formfest ausgebildet werden. Hierzu können beispielsweise sich im wesentlichen axial erstreckende Versteifungsrippen in die Umfangswand des Pflanzgefäßes eingeformt sein. Das auf diese Weise ermöglichte Nesten der leeren Pflanzgefäße bietet eine wesentlich verbesserte Transportmöglichkeit für die leeren Pflanzgefäße und eine wesentlich verbesserte Zuführung zu herkömmlichen Topfmaschinen. Durch die Möglichkeit, die leeren Pflanzgefäße nebeneinander zu stellen, ist auch das Einfüllen von Erde in herkömmlicher Handarbeit nach wie vor möglich.

Eine weitere Verbesserung hinsichtlich der Versteifung der Gefäßwandung zum Aufstellen und Nesten der leeren Pflanzgefäße ergibt sich, wenn man am Übergang vom Gefäßboden zur Umfangswand einen sich ringsum erstreckenden, fasenartigen Abschrägungsstreifen in der Gefäßwandung ausbildet.

Besonders vorteilhaft ist es im Rahmen der Erfindung, viereckigen, vorzugsweise quadratischen Gefäßquerschnitt vorzusehen und an den Querschnitts-Endbereichen fasenartig abgeschrägte Übergangsstreifen in der Umfangswand und ausgerundete Ecken im Öffnungsrand auszubilden. Die so gestalteten erfindungsgemäßen Pflanzgefäße bieten optimale Platzausnutzung während des Kultivierens und des Transportes. Während des Kultivierens kann eine Vielzahl solcher bepflanzter Pflanzgefäße auf einer Fläche in enger Anordnung aufgestellt werden, so daß bei Bewässerung von oben keine nennenswerten Wasserverluste auftreten.

Zur Versteifung des Gefäßbodens können in diesen sich in Bodenmitte kreuzende Versteifungsrippen eingeformt sein. Diese Versteifungsrippen bieten zugleich eine günstige Anbringungsmöglichkeit für Be- und Entwässerungsöffnungen, nämlich in ihren seitlichen Wandungsteilen.

Trotz der folienartig dünnen Ausbildung der Gefäßwandung bietet die Erfindung den Vorteil, Wurzelballen gegen Licht und UV-Strahlen wirksam zu schützen, in dem man die Gefäßwandung — zumindest in einer Wandschicht — für Licht und UV-Strahlen im wesentlichen undurchlässig ausbildet.

In einer bevorzugten Ausführungsform der Erfindung ist der Öffnungsrand als stabiler Stapel- und Handhabungsrand mit einem ebenfalls stabilen, versteifenden Öffnungsflansch am oberen Ende und einem zur folienförmigen Umfangswand führenden Übergangsrand am unteren Ende ausgebildet. Diese Ausführungsform des erfindungsgemäßen Pflanzgefäßes eignet sich besonders gut hinsichtlich Nestbarkeit und Verwendbarkeit in herkömmlichen Topfmaschinen. Um bei dem erfindungsgemäßen Pflanzgefäß ein sicheres Offenhalten der dünnfolienartigen Umfangswand zu gewährleisten, empfiehlt es sich, die Behälterwandung zumindest einseitig mit einer elektrostatischen Aufladung verhindernden Beschichtung zu versehen. Eine solche elektrostatische Aufladung verhindernde Beschichtung ist von besonderer Bedeutung bei nestbarer Ausbildung des Pflanzgefäßes, um das Nesten (Zusammenstecken) und das Vereinzeln der Pflanzgefäße zu erleichtern.

Ein Ausführungsbeispiel der Erfindung wird im folgenden anhand der Zeichnung näher erläutert. Es zeigt

Fig. 1 ein erfindungsgemäßes Pflanzgefäß teilweise in axialem Schnitt (linke Hälfte) und teilweise in Seitenansicht (rechte Hälfte) und

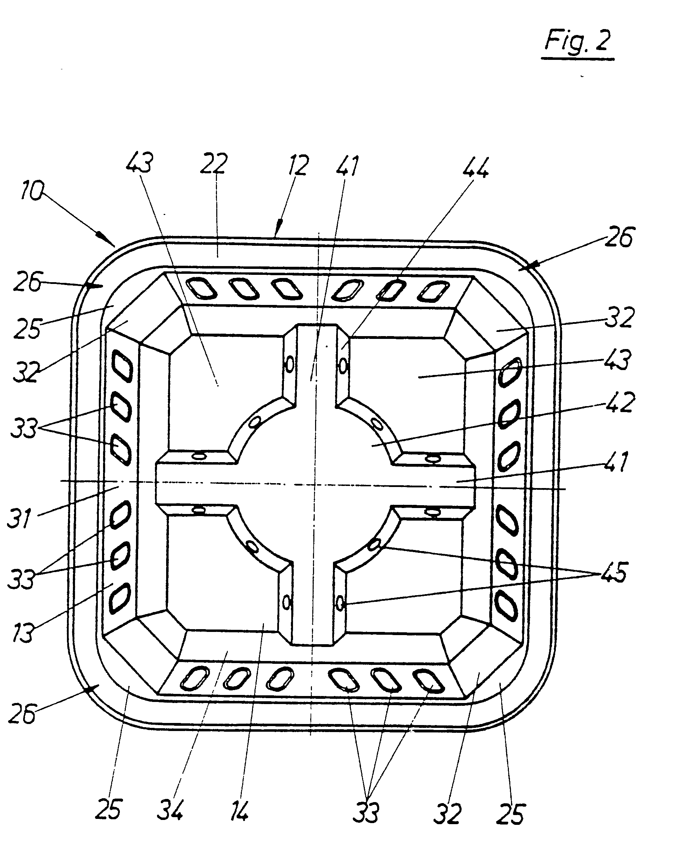

Fig. 2 das Pflanzgefäß gemäß Fig. 1 in Draufsicht.

Wie die Zeichnung zeigt, hat das Pflanzgefäß 10 eine einstückige Gefäßwandung 11, die den oberen Öffnungsrand 12, die Umfangswand 13 und den Gefäßboden 14 umfaßt. Die gesamte Gefäßwandung 11 ist aus thermoplastischem Kunststoff durch Tiefziehen hergestellt. Hierbei ist der Öffnungsrand als tragendes und versteiftes Element stabil geformt, während die Umfangswand 13 und der Boden 14 dünnfolienartig, d. h. sehr dünn auf 10 µm bis 25 µm Dicke, tiefgezogen sind.

Der Öffnungsrand 12 weist im dargestellten Beispiel einen stabilen Stapel- und Handhabungsrand 21 auf, der sich nach der Gefäßöffnung hin leicht verengt, um sich beim Nesten der Pflanzgefäße 10 mit seinem unteren Außenrand auf den oberen Rand eines aufnehmenden Pflanzgefäßes zu setzen. Die Höhe des Stapel- und Handhabungsrandes 21 bildet somit den Stapelabstand der genesteten Pflanzgefäße 10.

Am oberen Ende geht der Stapel- und Handhabungsrand 21 in einen ebenfalls stabilen, versteifenden Öffnungsflansch 22 über, der an seinem Außenumfang zu einem nach unten ragenden Bördelrand 23 umgelegt ist. Am unteren Ende des Stapel- und Handhabungsrandes 21 schließt sich ein Übergangsrand 24 an, der zugleich eine untere Stapelschulter bildet, insbesondere in den Eckbereichen, weil dort durch den Übergang der Formgebung des Öffnungsrandes 12 in die Formgebung der Umfangswand 13 Schulterplatten 25 gebildet sind, die die Form von Kreisabschnitten aufweist. Dies rührt daher, daß das Pflanzgefäß in dem in der Zeichnung dargestellten Ausführungsbeispiel mit im wesentlichen quadratischem Querschnitt ausgebildet ist, wobei die Eckbereiche des Querschnittes in der Umfangswand 13 fasenartig abgeschrägte Übergangsstreifen 32 und im Öffnungsrand 12 ausgerundete Ecken 26 aufweisen.

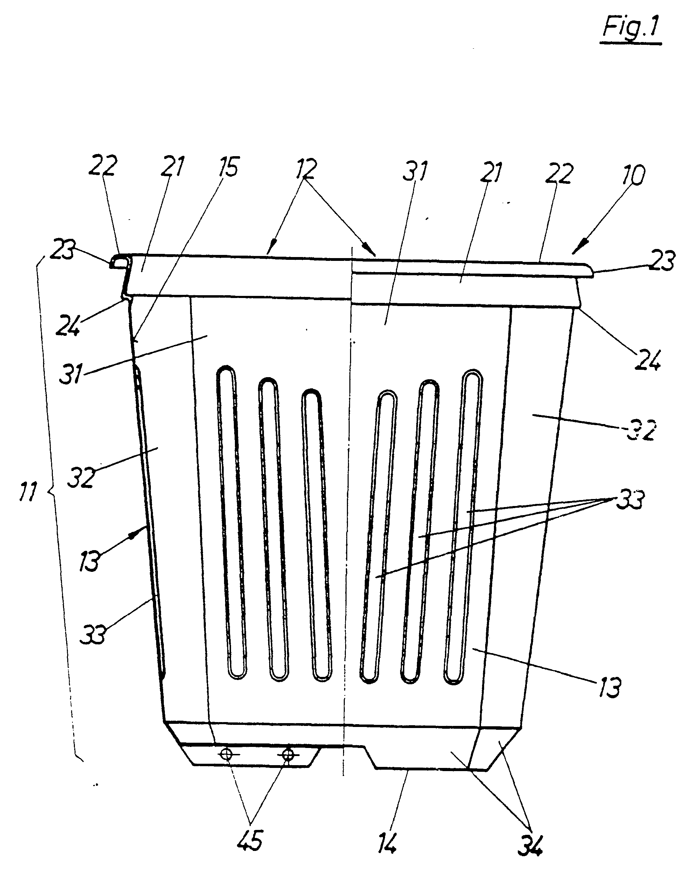

Wie im linken Teil der Fig. 1 gezeigt, geht die Dicke der Gefäßwandung 11 an dem Übergangsrand 24 bzw. knapp unterhalb des Übergangsrandes 24 von der größeren Wanddicke des Öffnungsrandes 12 auf die geringe Wanddicke der folienförmigen Umfangswand 13 über.

Zwischen den obenerwähnten, fasenartig abgeschrägten Übergangsstreifen 32 der Umfangswand 13 ist an jeder Gefäßseite ein eigentlicher Wandbereich 31 gebildet, der im dargestellten Beispiel durch eingeformte, sich im wesentlichen axial erstreckende Rippen 33 versteift ist. Am unteren Ende ist die Umfangswand 13 mit einem sich ringsum erstreckenden, fasenartigen Abschrägungsstreifen 34 ausgebildet, der in den Gefäßboden 14 übergeht. Der Gefäßboden 14 hat im dargestellten Beispiel zwei sich in Bodenmitte, innerhalb einer dort gebildeten Rosette 42 kreuzende Versteifungsrippen 41, die ebenso wie die Rosette 42 von den eigentlichen Bodensektoren 43 nach dem Gefäßinneren nach oben geformt sind. Die schräg liegenden Verbindungswände 44 zwischen den eigentlichen Bodensektoren 43 und den Versteifungsrippen 41 bzw. der Rosette 42 enthalten die für das Pflanzgefäß erforderlichen Be- und Entwässerungsöffnungen 45.

Um zu verhindern, daß sich die Gefäßwandung 11 elektrostatisch auflädt, ist im dargestellten Beispiel an der Innenseite der Gefäßwandung 11 eine Beschichtung 15 angebracht, die aus dem gleichen oder ähnlichem Kunststoff wie die Gefäßwandung besteht, dem aber eine das elektrostatische Aufladen der Kunststoffoberfläche verhindernde chemische Verbindung beigegeben ist.

Das Pflanzgefäß 10 besteht aus Polyolefin, beispielsweise Polypropylen. Polyolefin, besonders Polypropylen, bieten den Vorteil besonderer Flexibilität und Zähigkeit der folienartig dünnen Umfangswandung 13 und Gefäßboden 14.

Sofern entsprechend den jeweiligen Benutzungsverhältnissen vom Nesten und einzelnen Aufstellen der leeren Pflanzgefäße abgesehen werden kann, bietet sich im Rahmen der Erfindung auch die Möglichkeit, Umfangswand und Gefäßboden ohne besondere Versteifungselemente noch stärker beutelartig oder sackartig mit dünnfolienartiger Wandung auszubilden. Zur Lagerung und Transport kann dann der beutelartige oder sackartige Gefäßteil mit Umfangswand und Gefäßboden unter dem versteiften Öffnungsrand zusammengefaltet werden.

Für die dünnfolienartige Ausbildung von Umfangswand und Gefäßboden eignen sich Wanddicken im Bereich zwischen 10 μm und 25 μm.

## Patentansprüche

1. Dünnwandiges Pflanzgefäß (10) aus thermoplastischem Kunststoff, bei dem in Art eines Pflanzentopfes der Gefäßboden (14), die Umfangswand (13) und der die Umfangswand (13) abschließende Öffnungsrand (12) einstückig durch Tiefziehen aus Polyolefin, beispielsweise Polypropylen geformt sind und sich die Umfangswand (13) vom Boden (14) zum Öffnungsrand (12) hin erweitert, dadurch gekennzeichnet, daß der Öffnungsrand (12) als tragendes und versteifendes Element aus dem Polyolefin stabil ausgebildet ist und die Umfangswand (13) und der Boden (14) als einstückig daran angeschlossener, beutelartiger Gefäßteil dünnfolienartig auf eine Wanddicke zwischen 10 μm und 25 μm aus dem Polyolefin tiefgezogen ausgeführt sind.

2. Pflanzgefäß nach Anspruch 1, dadurch gekennzeichnet, daß die Umfangswand (13) und der Boden (14) durch eingeformte Profilelemente (33, 41) für Aufstellen und Nesten der leeren Pflanzgefäße soeben ausreichend formfest ausgebildet sind.

3. Pflanzgefäß nach Anspruch 2, dadurch gekennzeichnet, daß sich im wesentlichen axial erstreckende Versteifungsrippen (33) in die Umfangswand (13) eingeformt sind.

4. Pflanzgefäß nach einem der Ansprüche 1 bis 3, dadurch gekennzeichnet, daß am Übergang vom Gefäßboden zur Umfangswand ein sich ringsum erstreckender fasenartiger Abschrägungsstreifen (34) in der Gefäßwandung (11) ausgebildet ist.

5. Pflanzgefäß nach einem der Ansprüche 1 bis 4, dadurch gekennzeichnet, daß bei viereckiger, vorzugsweise quadratischer Ausbildung des Gefäßquerschnitts an den Querschnitts-Eckbereichen fasenartig abgeschrägte Übergangsstreifen (32) in der Umfangswand (13) und ausgerundete Ecken (26) im Öffnungsrand (12) vorgesehen sind.

6. Pflanzgefäß nach einem der Ansprüche 1 bis 5, dadurch gekennzeichnet, daß sich in Bodenmitte (Rosette 42) kreuzende Versteifungsrippen (41) in den Gefäßboden (14) eingeformt sind.

7. Pflanzgefäß nach Anspruch 6, dadurch gekennzeichnet, daß Be- und Entwässerungsöffnungen (45) seitlich in den sich kreuzenden Versteifungsrippen (41) des Bodens (14) angebracht sind.

8. Pflanzgefäß nach einem der Ansprüche 1 bis 7, dadurch gekennzeichnet, daß der Öffnungsrand (12) als stabiler Stapel- und Handhabungsrand (21) mit einem ebenfalls stabilen, versteifenden Öffnungsflansch (22) am oberen Ende und einem zur dünnfolienartigen Umfangswand (13) führenden Übergangsrand (24) am unteren Ende ausgebildet ist.

9. Pflanzgefäß nach einem der Ansprüche 1 bis 8, dadurch gekennzeichnet, daß die Behälterwandung (11) zumindest einseitig mit einer elektrostatischen Aufladung verhindernden Beschichtung (15) versehen ist.

## Claims

1. Thin-walled planting vessel (10) made of thermoplastic, in the manner of a plant pot, the vessel bottom (14), the peripheral wall (13) and the orifice edge (12) terminating the peripheral wall (13) are formed of polyolefin, for example polypropylene, in one piece by means of deep-drawing, and the peripheral wall (13) widens from the bottom (14) towards the orifice edge (12), characterized in that the orifice edge (12) is made sturdily of the polyolefin so as to function as a supporting and stiffening element, and the peripheral wall (13) and the bottom (14), taking the form of a bag-like vessel part joined in one piece to the latter, are formed of the polyolefin by means of deep-drawing in the manner of a thin film to a wall thickness of between 10 μm and 25 μm.

2. Planting vessel according to Claim 1, characterised in that by means of moulded-in profile elements (33, 41) the peripheral wall (13) and the bottom (14) are made just sufficiently dimensionally stable for empty planting vessels to stand up and be nested in one another.

3. Planting vessel according to Claim 2, characterised in that stiffening ribs (33) extending essentially axially are moulded into the peripheral wall (13).

4. Planting vessel according to one of Claims 1 to 3, characterised in that at the transition from the vessel bottom to the peripheral wall a chamfer-like sloping strip (34) extending all round is formed in the vessel wall (11).

5. Planting vessel according to one of Claims 1 to 4, characterised in that, when the vessel cross-section is four-cornered, preferably square, there are in the cross-sectional corner regions transition strips (32) sloping in the manner of a chamfer in the peripheral wall (13) and rounded-out corners (26) in the orifice edge (12).

6. Planting vessel according to one of Claims 1 to 5, characterised in that stiffening ribs (41) intersecting in the centre of the bottom (rose 42) are moulded into the vessel bottom (14).

7. Planting vessel according to Claim 6, characterised in that watering and drainage orifices (45) are made laterally in the intersecting stiffening ribs (41) of the bottom (14).

8. Planting vessel according to one of Claims 1 to 7, characterised in that the orifice edge (12) is designed as a sturdy stacking and handling edge (21) with a likewise sturdy stiffening orifice flange (22) at the top end and, at the bottom end, a transition edge (24) leading to the peripheral wall (13) resembling a thin film.

9. Planting vessel according to one of Claims 1 to 8, characterised in that the vessel wall (11) is provided on at least one side with a coating (15) which prevents electrostatic charging.

**Revendications**

1. Bac à plantes à parois minces (10) fait de matière thermoplastique, dans lequel, à la façon d'un pot de fleurs, le fond du bac (14), la paroi périphérique (13) et la bordure de l'orifice (12), terminant la paroi périphérique (13), sont formés d'une pièce, par emboutissage et constitués de polyoléfine, par exemple de polypropylène, et la paroi périphérique (13) s'élargit à partir du fond (14) jusqu'à la bordure de l'orifice (12), caractérisé en ce que la bordure de l'orifice (12) est fabriquée de façon robuste à partir de polyoléfine pour faire office d'élément de support et de raidisseur, et la paroi périphérique (13) et le fond (14), prenant la forme d'une partie du bac en forme de sac, joint en une pièce à celle-ci, sont formés par emboutissage, à la façon d'un film fin, en une épaisseur de paroi d'entre 10 μm et 25 μm à partir de polyoléfine.

2. Bac à plantes selon la revendication 1, caractérisé en ce qu'au moyen d'éléments profilés moulés (33, 41) la paroi périphérique (13) et le fond (14) sont fabriqués de façon juste assez stable, en termes de taille, pour que les bacs à plantes vides puissent tenir debout et être empilés les uns dans les autres.

3. Bac à plantes selon la revendication 2, caractérisé en ce que des côtes raidisseuses (33) s'étendant essentiellement axialement sont formées dans la paroi périphérique (13).

4. Bac à plantes selon l'une quelconque des revendications 1 à 3, caractérisé en ce qu'a la jointure du fond du bac à la paroi périphérique, une bande en biseau oblique circonférentielle (34) est formée dans la paroi du bac (11).

5. Bac à plantes selon l'une quelconque des revendications 1 à 4, caractérisé en ce que lorsque la section du bac est un quadrilatère, de préférence un carré, l'on prévoit dans les régions des coins du quadrilatère des bandes de jointure (32) en biseau oblique dans la paroi périphérique (13) et des coins arrondis (26) dans la bordure de l'orifice (12).

6. Bac à plantes selon l'une quelconque des revendications 1 à 5, caractérisé en ce que des côtes raidisseuses (41) dont l'intersection se trouve au milieu du fond (rosette 42), sont formées dans le fond du bac (14).

7. Bac à plantes selon la revendication 6, caractérisé en ce que l'on prévoit des orifices d'arrosage et de drainage (45) sur les côtés dans les côtés raidisseuses (41) du fond (14) qui s'entrecroisent.

8. Bac à plantes selon l'une quelconque des revendications 1 à 7, caractérisé en ce que la bordure de l'orifice (12) est conçue comme une bordure robuste (21) en vue de l'empilage et de la manutention avec un rebord d'orifice également robuste et raidisseur (22) à l'extrémité supérieure et, à l'extrémité inférieure une bordure de jointure (24) à la paroi périphérique (13) qui est du genre film fin.

9. Bac à plantes selon l'une quelconque des revendications 1 à 8, caractérisé en ce que la paroi du récipient (11) est pourvue sur au moins un côté d'un revêtement (15) qui empêche le chargement électrostatique.

Fig.1

Fig. 2